# EUROPÄISCHE PATENTSCHRIFT

(11) **EP 2 700 912 B1**
(45) Veröffentlichungstag und Bekanntmachung des Hinweises auf die Patenterteilung: **22.06.2016**
(21) Anmeldenummer: 13001237.0
(22) Anmeldetag: 12.03.2013
(51) Int. Cl.: G01F 1/58

(54) **Magnetisch-induktives Durchflussmessgerät und Verfahren zu seiner Herstellung**
Magnetic-inductive flow rate meter and its manufacturing method
Appareil de mesure de débit à induction magnétique et son procédé de fabrication

(30) Priorität: 21.08.2012 DE 102012016407; 11.09.2012 DE 102012017904
(43) Veröffentlichungstag der Anmeldung: 26.02.2014
(73) Patentinhaber: Krohne AG, 4019 Basel (CH)
(72) Erfinder: Neven, Josef, 26540 Mours St. Eusèbe (FR)
(74) Vertreter: Gesthuysen Patent- und Rechtsanwälte

(56) Entgegenhaltungen:
- EP-A2- 2 192 390
- DE-A1- 3 627 993
- DE-A1- 4 302 158
- DE-A1-102005 030 193
- DE-A1-102008 036 962
- DE-A1-102010 056 077
- JP-A- S56 164 917
- US-A- 4 390 578
- US-A- 4 773 275
- US-A- 5 224 394

## Beschreibung

Die Erfindung betrifft ein Verfahren zur Herstellung eines magnetisch-induktiven Durchflussmessgeräts mit mindestens einem Messrohr für den Durchfluss eines elektrisch leitenden Mediums, mit mindestens einer Magnetfelderzeugungseinrichtung zur Erzeugung eines zumindest auch senkrecht zur Längsachse des Messrohrs verlaufenden Magnetfeldes und mit mindestens zwei Messelektroden, wobei das Messrohr einen Grundkörper aufweist, wobei die virtuelle Verbindungslinie der beiden Messelektroden zumindest im Wesentlichen senkrecht zur Richtung des das Messrohr senkrecht zur Längsachse des Messrohrs durchsetzenden Magnetfeldes verläuft, wobei zunächst in den Grundkörper des Messrohrs der Durchdringung der Messelektroden durch das Messrohr dienende Durchdringungsstellen eingebracht werden und wobei dann der Grundkörper zumindest an der Messrohrinnenseite und auch innerhalb der Durchdringungsstellen mit einer Deckschicht versehen wird.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die mindestens eine Magnetfeldspule, üblicherweise zwei Magnetfeldspulen aufweist, ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohrs bzw. senkrecht zur Strömungsrichtung des Mediums auf.

Eingangs ist ausgeführt, dass das Messrohr einen metallischen Grundkörper aufweist und der Grundkörper zumindest an der Messrohrinnenseite mit einer thermoplastischen Deckschicht versehen ist. Statt eines solchen Messrohrs kann auch ein Messrohr vorgesehen sein, das statt eines metallischen Grundkörpers einen nicht-metallischen Grundkörper, zum Beispiel einen keramischen Grundkörper aufweist. Auch sollen vorliegend magnetisch-induktive Durchflussmessgeräte umfasst sein, bei denen das Messrohr insgesamt aus einem thermoplastischen Werkstoff besteht. Nachfolgend wird jedoch immer davon ausgegangen, dass das Messrohr einen metallischen Grundkörper aufweist und der Grundkörper zumindest an der Messrohrinnenseite mit einer thermoplastischen Deckschicht versehen ist. Die Formulierung "mindestens an der Messrohrinnenseite" umfasst natürlich auch eine Ausführungsform, bei der der Grundkörper allseitig mit einer thermoplastischen Deckschicht versehen ist.

Wenn es einleitend heißt, dass zu dem in Rede stehenden magnetisch-induktiven Durchflussmessgerät mindestens eine Magnetfelderzeugungseinrichtung "zur Erzeugung eines zumindest auch senkrecht zur Längsachse des Messrohrs verlaufenden Magnetfeldes" gehört, dann sei hier noch einmal darauf hingewiesen, dass das Magnetfeld zwar vorzugsweise senkrecht zur Längsachse des Messrohrs bzw. senkrecht zur Strömungsrichtung des Mediums verläuft, ausreichend jedoch ist, dass eine Komponente des Magnetfeldes senkrecht zur Längsachse des Messrohrs bzw. senkrecht zur Strömungsrichtung des Mediums verläuft.

Eingangs ist auch ausgeführt worden, dass zu dem in Rede stehenden magnetisch-induktiven Durchflussmessgerät mindestens zwei Messelektroden gehören, wobei die virtuelle Verbindungslinie der beiden Messelektroden zumindest im Wesentlichen senkrecht zur Richtung des das Messrohr durchsetzenden Magnetfeldes verläuft. Vorzugsweise verläuft die virtuelle Verbindungslinie der beiden Messelektroden tatsächlich - mehr oder weniger - senkrecht zur Richtung des das Magnetfeld durchsetzenden Magnetfeldes.
Die durch Induktion im strömenden, elektrisch leitfähigen Medium erzeugte elektrische Feldstärke kann durch direkt, also galvanisch mit dem Medium in Kontakt stehende Messelektroden als elektrische Spannung gemessen werden oder auch von nicht direkt, also nicht galvanisch mit dem Medium in Kontakt stehenden Elektroden kapazitiv detektiert werden. Vorliegend geht es um magnetisch-induktive Durchflussmessgeräte, bei denen die durch Induktion im strömenden, elektrisch leitfähigen Medium erzeugte elektrische Feldstärke durch direkt, also galvanisch mit dem Medium in Kontakt stehende Messelektroden als elektrische Spannung gemessen wird.
Der Messfehler bei im Stand der Technik bekannten magnetisch-induktiven Durchflussmessgeräten ist heute relativ klein, ein Messfehler kleiner als 0,2 % kann realisiert werden.

Zu bekannten magnetisch-induktiven Durchflussmessgeräten wird beispielhaft nur auf die deutschen Offenlegungsschriften 197 08 857, 10 2004 063 617, 10 2008 057 755 und 10 2008 057 756 sowie auf die noch nicht veröffentlichte Patentanmeldung 10 2011 119 982.2 verwiesen.

Aus der DE 10 2005 030 193 A1 ist ein Verfahren zum Einsetzen von Messelektroden bei einem magnetisch-induktiven Durchflussmessgerät bekannt, wobei zur Erfassung der durch das fließfähige Medium induzierten Messspannung mindestens zwei Messelektroden in einen je zugeordneten Durchbruch in der Wandung des metallischen Messrohrs über eine Isolationsschicht elektrisch isoliert eingesetzt werden, wobei vor oder während der Aufbringung der Isolationsschicht auf das Messrohr ein mit der Gestalt der Messelektrode korrespondierendes Formteil oder die Messelektrode selbst in den Durchbruch der Wandung des Messrohres zur Formung des Elektrodensitzes eingesetzt wird und nach Aushärten der aufgebrachten Isolationsschicht entfernt wird.
Weiter oben ist schon ausgeführt, dass es vorliegend um magnetisch-induktive Durchflussmessgeräte geht, bei denen die durch Induktion im strömenden, elektrisch leitfähigen Medium erzeugte elektrische Feldstärke durch direkt, also galvanisch mit dem Medium in Kontakt stehende Messelektroden als elektrische Spannung gemessen wird. Also ist es Aufgabe der Erfindung, ein Verfahren anzugeben, mit dem in einfacher Weise die Durchdringungsstellen des Messrohres, also die Stellen, an denen die Messelektroden das Messrohr durchdringen, flüssigkeitsdicht realisiert werden können, also die Messelektroden in einfacher Weise flüssigkeitsdicht, das Messrohr durchdringend, realisiert werden können.

Ein nicht erfindungsgemäßes magnetisch-induktives Durchflussmessgerät, ist dadurch gekennzeichnet, dass an den Durchdringungsstellen - Stellen, an denen die Messelektroden das Messrohr durchdringen - zwischen der thermoplastischen Deckschicht des Messrohrs und den Messelektroden eine durch Erwärmung der Deckschicht entstandene, flüssigkeitsdichte Verbindung realisiert ist.

Bei dem nicht-erfindungsgemäßen magnetisch-induktiven Durchflussmessgerät ist zunächst von Bedeutung, dass die Deckschicht, mit der der Grundkörper des Messrohrs versehen ist, auch innerhalb der Durchdringungsstellen realisiert ist. Wenn es also einleitend heißt, dass der Grundkörper zumindest an der Messrohrinnenseite mit einer thermoplastischen Deckschicht versehen ist, so schließt das ein, dass sich die thermoplastische Deckschicht vom Grundkörper aus in die Durchdringungsstellen erstreckt. Nicht notwendig ist also, dass die thermoplastische Deckschicht auch auf der Messrohraußenseite des Grundkörpers realisiert ist, - wenngleich vorteilhaft und vorzugsweise für das Messrohr des magnetisch-induktiven Durchflussmessgeräts gilt, dass der Grundkörper allseitig mit einer thermoplastischen Deckschicht versehen ist, also diese thermoplastische Deckschicht auf der Messrohrinnenseite des Grundkörpers, der Messrohraußenseite des Grundkörpers und im Bereich der Durchdringungsstellen vorgesehen ist, der Grundkörper also vollständig von der thermoplastischen Deckschicht umgeben ist, also auch im Bereich der Durchdringungsstellen.
Damit die Messelektroden relativ einfach im Messrohr platziert werden können, also in die Durchdringungsstellen eingebracht werden können, ist der Außendurchmesser der Messelektroden im Bereich der Durchdringungsstellen geringfügig kleiner als der Innendurchmesser der Durchdringungsstellen.

Im Übrigen ist eine bevorzugte Ausführungsform des nichterfindungsgemäßen magnetisch-induktiven Durchflussmessgeräts dadurch gekennzeichnet, dass die Messelektroden einen außen an das Messrohr anliegenden Bund und das Messrohr im Bereich der Durchdringungsstellen Anlageflächen für den Bund der Messelektroden aufweist. Diese Anlageflächen sind zunächst hilfreich beim Einbringen der Messelektroden in die Durchdringungsstellen des Messrohres. Sie dienen praktisch als Anschlag, so dass die Messelektroden dadurch richtig platziert werden können, dass sie soweit in die Durchdringungsstellen des Messrohrs eingebracht werden, dass der außen liegende Bund an die Anlagefläche zur Anlage kommt. Darüber hinaus entsteht bei dieser Ausführungsform auch zwischen dem Bund der Messelektroden und den am Messrohr im Bereich der Durchdringungsstellen realisierten Anlageflächen eine flüssigkeitsdichte Verbindung, wenn die thermoplastische Deckschicht, wie zuvor als vorteilhaft dargestellt, den Grundkörper vollständig umgibt, also nicht nur im Bereich der Durchdringungsstellen, sondern auch im Bereich der Anlageflächen vorgesehen ist.
Aus dem, was einleitend ausgeführt ist, und aus dem, was in Bezug auf die der Erfindung zugrunde liegende Aufgabe ausgeführt ist, resultiert, dass Gegenstand der Erfindung ein Verfahren zur Herstellung eines solchen magnetisch-induktiven Durchflussmessgeräts ist. Dass die Herstellung des magnetisch-induktiven Durchflussmessgeräts besondere Bedeutung haben kann, resultiert auch aus dem, was zuvor ausgeführt worden ist.
Das erfindungsgemäße Verfahren zur Herstellung eines magnetisch-induktiven Durchflussmessgeräts der zuvor beschriebenen Art ist zunächst und im Wesentlichen dadurch gekennzeichnet, dass eine thermoplastische Deckschicht realisiert wird und dass schließlich die Messelektroden durch Erwärmung der thermoplastischen Deckschicht an ihrer Oberfläche bis zum Aufschmelzen im Bereich der Durchdringungsstellen flüssigkeitsdicht mit dem Messrohr verbunden werden, wobei die Messelektroden auf die für das Verbinden der Messelektroden mit der Deckschicht des Messrohrs erforderliche Temperatur erwärmt werden und dann in die Durchdringungsstellen eingebracht werden.
Wenn es zuvor heißt, dass im zweiten Verfahrensschritt der Grundkörper jedenfalls im Bereich der Durchdringungsstellen mit einer thermoplastischen Deckschicht versehen wird, dann berücksichtigt das, dass einerseits funktionsnotwendig die thermoplastische Deckschicht nur im Bereich der Durchdringungsstellen ist, dass andererseits die thermoplastische Deckschicht an der Messrohrinnenseite auch realisiert werden kann, bevor in den Grundkörper des Messrohrs für die Durchdringung der Messelektroden durch das Messrohr dienende Durchdringungsstellen eingebracht werden. Vorzugsweise wird jedoch zunächst der deckschichtfreie Grundkörper mit den Durchdringungsstellen versehen und wird danach der Grundkörper insgesamt mit einer thermoplastischen Deckschicht versehen, also an der Messrohrinnenseite, der Messrohraußenseite und, die Messrohrinnenseite mit der Messrohraußenseite verbindend, im Bereich der Durchdringungsstellen.

Zuvor ist als dritter Verfahrensschritt das flüssigkeitsdichte Verbinden der Messelektrode mit dem Messrohr behandelt worden, und zwar durch den erfindungsgemäßen Schritt der Erwärmung der thermoplastischen Deckschicht im Bereich der Durchdringungsstellen.

Der zuletzt beschriebene Verfahrensschritt der erfindungsgemäßen Herstellung eines magnetisch-induktiven Durchflussmessgeräts besteht darin, dass die Messelektroden auf die für das Verbinden der Messelektroden mit der Deckschicht des Messrohrs erforderliche Temperatur erwärmt werden und dann, vorzugsweise mit einer geringen Eindringkraft, in die Durchdringungsstellen eingebracht werden.

Wesentlich für das nicht-erfindungsgemäße magnetisch-induktive Durchflussmess-gerät und wesentlich für das erfindungsgemäße Verfahren zur Herstellung des magnetisch-induktiven Durchflussmessgeräts ist eine ther-moplastische Deckschicht, die den Grundkörper des Messrohrs zumindest teilweise, vorzugsweise insgesamt bedeckt, die bei Erwärmung an ihrer Oberfläche so anschmilzt oder aufschmilzt, dass mit den eingebrachten Messelektroden eine flüssigkeitsdichte Verbindung entsteht.

Als Werkstoff für die thermoplastische Deckschicht eignet sich insbesondere ein solcher, der unter anderem unter der Bezeichnung "Rilsan" von der Firma Kersten Kunststoffcoating GmbH in Kahla in Thüringen vertrieben wird. Die chemische Bezeichnung für den Werkstoff "Rilsan" ist Polyamid 11. Es ist ein pulverförmiger, thermoplastischer Kunststoff, der auf der Grundlage des pflanzlichen Rizinusöls hergestellt wird. Dabei wird Rizinusöl zu einem Monomer verarbeitet, aus dem durch Polymerisation Polyamid 11 entsteht.

Die erfindungsgemäß - bei dem erfindungsgemäßen Verfahren zur Herstellung eines magnetisch-induktiven Durchflussmessgeräts - erreichten Vorteile sind vor allem darin zu sehen, insbesondere wenn berücksichtigt wird, dass es sich bei den magnetisch-induktiven Durchflussmessgeräten um Massenprodukte handeln kann, dass in besonders einfacher und kostengünstiger Weise eine flüssigkeitsdichte Verbindung zwischen den in das Messrohr eingebrachten Messelektroden und dem Messrohr erreicht ist. Es bedarf zur flüssigkeitsdichten Verbindung keines besonderen Dichtmittels, also z. B. keines O-Ringes, aber auch keines aufwendigen Einschraubens der Messelektroden.

In der Zeichnung zeigen
- Fig. 1: schematisch, ein magnetisch-induktives Durchflussmessgerät in seinem grundsätzlichen Aufbaumaß,
- Fig. 2: das Messrohr des magnetisch-induktiven Durchflussmessgeräts nach Fig. 1, in einer schematischen Schnittdarstellung,
- Fig. 3: das Messrohr nach Fig. 2, in einer anderen Seitenansicht, auch wieder in einer Schnittdarstellung,
- Fig. 4: schematisch, den Querschnitt des Messabschnitts des Messrohrs nach den Fig. 1 bis 3, im Bereich der nicht dargestellten Messelektroden, und
- Fig. 5: in gegenüber der Fig. 4 vergrößerter Darstellung, den Querschnitt des Messabschnitts des Messrohrs gemäß den Fig. 1 bis 3 im Bereich der Messelektroden, mit den im das Messrohr eingebrachten Messelektroden.

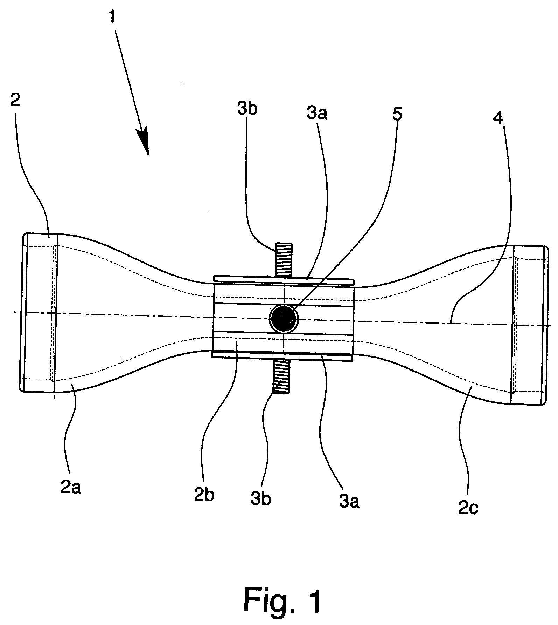

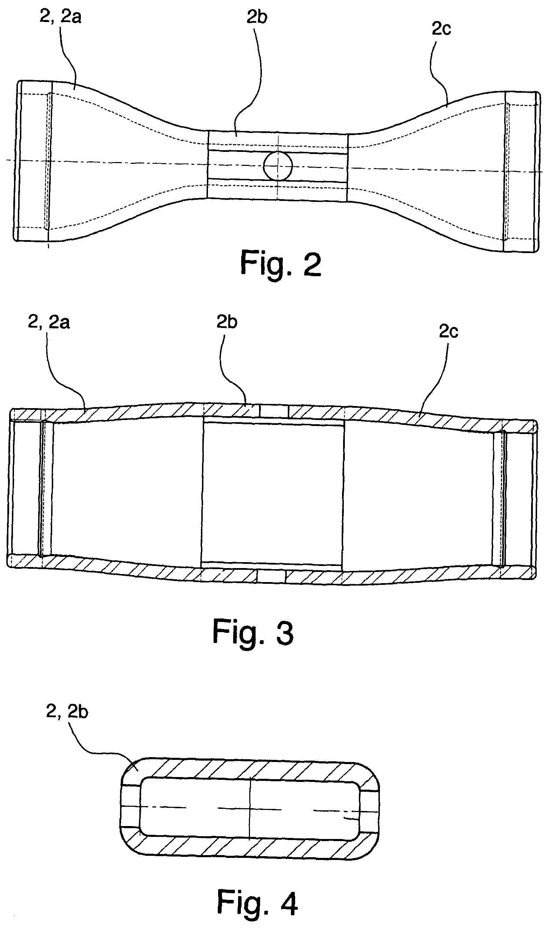

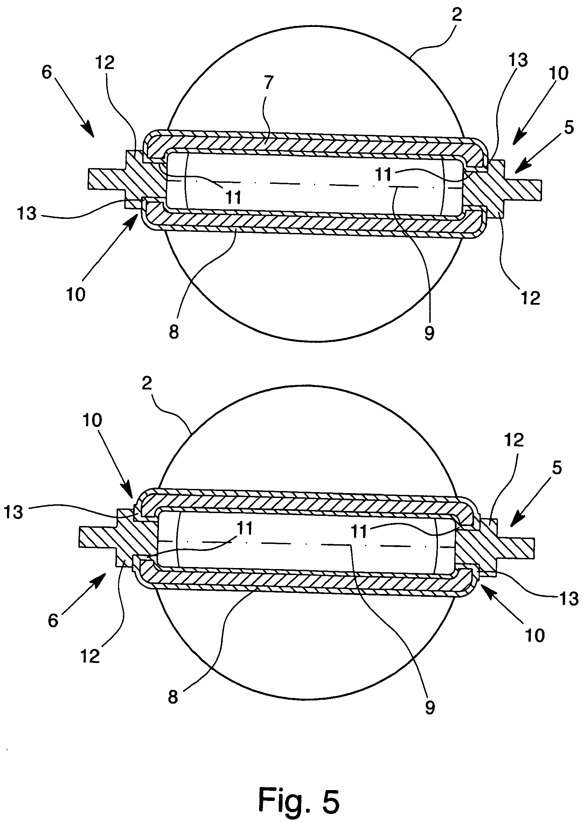

Die Fig. 1 zeigt, nur schematisch, ein magnetisch-induktives Durchflussmessgerät 1 mit einem Messrohr 2 für den Durchfluss eines elektrisch leitenden, mit einer Magnetfelderzeugungseinrichtung 3 zur Erzeugung eines zumindest auch senkrecht zur Längsachse 4 des Messrohrs 2 verlaufenden Magnetfeldes und mit zwei Messelektroden 5, 6, wobei das Messrohr 1, was nur die Fig. 5 zeigt, einen metallischen Grundkörper 7 aufweist und der Grundkörper 7 allseitig mit einer thermoplastischen Deckschicht 8 versehen ist und wobei die virtuelle Verbindungslinie 9 der beiden Messelektroden 5, 6 senkrecht zur Richtung des das Messrohr 2 senkrecht zur Längsachse 4 des Messrohrs 2 durchsetzenden Magnetfeldes verläuft.
Im Einzelnen weist das Messrohr 2 einen Einströmabschnitt 2a, einen an den Einströmabschnitt 2a anschließenden Messabschnitts 2b und einen an den Messabschnitt 2b anschließenden Ausströmabschnitt 2c auf.
Nur in Fig. 1 ist angedeutet, dass zu der Magnetfelderzeugungseinrichtung 3 zwei Hohlplatten 3a und zwei Magnetspulen 3b gehören.
Für das in den Figuren dargestellte Ausführungsbeispiel eines magnetisch-induktiven Durchflussmessgeräts 1 gilt, wie die Fig. 1, 2 und 3 zeigen, dass das Messrohr 2 am Anfang des Einströmabschnitts 2a und am Ende des Ausströmabschnitts 2c einen kreisförmigen Querschnitt hat. Im Gegensatz dazu hat das Messrohr 2 im Bereich des Messabschnitts 2b einen - mehr oder weniger - rechteckigen Querschnitt, was ein Vergleich der Fig. 1 und 2 einerseits und der Fig. 3 andererseits, vor allem aber die Fig. 4 und 5 zeigen.

Wie die Fig. 5, und zwar sowohl die Fig. 5a als auch die Fig. 5b, zeigt, ist an den Durchdringungsstellen 10 - Stellen , an denen die Messelektroden 5, 6 das Messrohr 2 im Bereich des Messabschnitts 2b durchdringen - zwischen der thermoplastischen Deckschicht 8 des Messrohrs 2 und den Messelektroden 5 und 6 eine durch Erwärmung der Deckschicht 8 entstandene, flüssigkeitsdichte Verbindung realisiert, Verbindung nicht im chemischen Sinn, sondern im mechanischen Sinn verstanden.

Nicht zu erkennen ist, dass der Außendurchmesser der Messelektroden 5, 6 in dem Bereich, in dem sie sich im Bereich der Durchdringungsstellen 10 befinden, geringfügig kleiner ist als der Innendurchmesser der Durchdringungsstellen 10.

Im Übrigen zeigt die Fig. 5 insoweit ein bevorzugtes Ausführungsbeispiel des magnetisch-induktiven Durchflussmessgeräts 1, als die Messelektroden 5, 6 einen außen an das Messrohr 2, im Bereich des Messabschnitts 2b, anliegenden Bund 12 und das Messrohr 2 im Bereich der Durchdringungsstellen 10 Anlageflächen 13 für den Bund 12 der Messelektroden 5 und 6 aufweist. Im Ausführungsbeispiel gemäß der Fig. 5a hat der Grundkörper 7 eine durchgehend gleiche Wandstärke und hat die Deckschicht 8 zur Realisierung der Anlageflächen eine etwas größere Wandstärke. Im Gegensatz dazu gilt für das Ausführungsbeispiel nach Fig. 5b, dass der Grundkörper 7 zur Realisierung der Anlageflächen 13 in dem entsprechenden Bereich eine größere Wandstärke hat, während die Deckschicht 8 durchgängig eine gleich bleibende Wandstärke hat.

Für die Herstellung des zuvor erläuterten magnetisch-in-duktiven Durchflussmessgeräts 1 gilt, dass in den Grundkörper 7 des Messrohrs 2, natürlich im Bereich des Messabschnitts 2b, die der Durchdringung der Messelektroden 5, 6 durch das Messrohr 2 dienenden Durchdrin-gungsstellen 10 eingebracht werden, vorzugsweise durch Bohren, dass dann der Grundkörper 7 - jedenfalls im Bereich der Durchdringungsstellen 10, vorzugsweise jedoch insgesamt - mit der thermoplastischen Deckschicht 8 versehen wird und dass schließlich die Messelektroden 5, 6 durch Erwärmung der thermoplastischen Deckschicht 8 im Bereich der Durchdringungsstellen 10 flüssigkeitsdicht mit dem Messrohr 2 verbunden werden.

Der zuvor erläuterte dritte Verfahrensschritt, das flüssigkeitsdichte Verbinden der Messelektroden 5, 6 mit dem Messrohr 2wird derart durchgeführt, dass die Messelektroden 5 und 6, und zwar noch nicht eingebracht, auf die für das Verbinden der Messelektroden 5, 6 mit der Deckschicht 8 des Messrohrs 2 erforderliche Temperatur erwärmt werden und dann, vorzugsweise mit einer geringen Eindringkraft, die erwärmten Messelektroden 5, 6 in die Durchdringungsstellen 10 eingebracht werden.

## Patentansprüche

1. Verfahren zur Herstellung eines magnetisch-induktiven Durchflussmessgeräts (1), mit mindestens einem Messrohr (2) für den Durchfluss eines elektrisch leitenden Mediums, mit mindestens einer Magnetfelderzeugungseinrichtung (3) zur Erzeugung eines zumindest auch senkrecht zur Längsachse (4) des Messrohrs (2) verlaufenden Magnetfeldes und mit mindestens zwei Messelektroden (5, 6), wobei das Messrohr (2) einen Grundkörper (7) aufweist, wobei die virtuelle Verbindungslinie (9) der beiden Messelektroden (5, 6) zumindest im Wesentlichen senkrecht zur Richtung des das Messrohr (2) senkrecht zur Längsachse (4) des Messrohrs (2) durchsetzenden Magnetfeldes verläuft, wobei zunächst in den Grundkörper (7) des Messrohrs (2) der Durchdringung der Messelektroden (5,6) durch das Messrohr (2) dienende Durchdringungsstellen (10) eingebracht werden und wobei dann der Grundkörper (7) zumindest an der Messrohrinnenseite und auch innerhalb der Durchdringungsstellen (10) mit einer Deckschicht (8) versehen wird,
**dadurch gekennzeichnet,**
**dass** eine thermoplastische Deckschicht realisiert wird und dass schließlich die Messelektroden (5, 6) durch Erwärmung der thermoplastischen Deckschicht (8) an ihrer Oberfläche bis zum Aufschmelzen im Bereich der Durchdringungsstellen (10) flüssigkeitsdicht mit dem Messrohr (2) verbunden werden, wobei die Messelektroden (5, 6) auf die für das Verbinden der Messelektroden (5, 6) mit der Deckschicht (8) des Messrohrs (2) erforderliche Temperatur erwärmt werden und dann in die Durchdringungsstellen (10) eingebracht werden.

## Claims

1. Method for producing a magnetic-inductive flowmeter (1) having at least one measuring tube (2) for the flow of an electrically conductive medium, having at least one magnetic field generator (3) for generating a magnetic field running at least also perpendicular to the longitudinal axis (4) of the measuring tube (2) and having at least two measuring electrodes (5, 6), wherein the measuring tube (2) has a base body (7), wherein the virtual connecting line (9) of both measuring electrodes (5, 6) runs at least essentially perpendicular to the direction of the magnetic field that permeates the measuring tube (2) perpendicular to the longitudinal axis (4) of the measuring tube (2), wherein the measuring electrodes (5, 6) penetrate the measuring tube using penetration sites (10) and wherein the base body (7) is then provided with a cover layer (8) at least on the inside of the measuring tube and also inside the penetration sites (10),
**characterized in,**
**that** a thermoplastic cover layer is implemented and that, finally, it has a liquid-tight connection with the measuring electrodes (5, 6) by warming the thermoplastic cover layer (8) at its surface until it melts in the area of the penetration sites (10), wherein the measuring electrodes (5, 6) are heated to a temperature necessary for the connection of the measuring electrodes (5, 6) to the cover layer (8) of the measuring tube (2) and are then inserted in the penetration sites (10).

## Revendications

1. Procédé de fabrication d'un appareil de mesure de débit à induction magnétique (1), comprenant au moins un tube de mesure (2) pour le débit d'un fluide électriquement conducteur, comprenant au moins un dispositif de génération de champ magnétique (3) pour générer un champ magnétique s'étendant au moins également perpendiculairement à l'axe longitudinal (4) du tube de mesure (2) et comprenant au moins deux électrodes de mesure (5, 6), le tube de mesure (2) présentant un corps de base (7), la ligne de connexion virtuelle (9) des deux électrodes de mesure (5, 6) s'étendant au moins essentiellement perpendiculairement à la direction du champ magnétique traversant le tube de mesure (2) perpendiculairement à l'axe longitudinal (4) du tube de mesure (2), des zones de traversée (10) servant au passage des électrodes de mesure (5, 6) à travers le tube de mesure (2) étant d'abord réalisées dans le corps de base (7) du tube de mesure (2) et le corps de base (7) étant ensuite pourvu d'une couche de revêtement (8) au moins au niveau du côté intérieur du tube de mesure et également à l'intérieur des zones de traversée (10),
**caractérisé en ce**
**qu'**une couche de revêtement thermoplastique est réalisée et finalement les électrodes de mesure (5, 6) sont connectées au tube de mesure (2) de manière étanche aux liquides par chauffage de la couche de revêtement thermoplastique (8) au niveau de sa surface jusqu'à fusion dans la région des zones de traversée (10), les électrodes de mesure (5, 6) étant chauffées à la température nécessaire pour la connexion des électrodes de mesure (5, 6) à la couche de revêtement (8) du tube de mesure (2) puis étant introduites dans les zones de traversée (10).
